# EUROPÄISCHE PATENTANMELDUNG

(11) **EP 0 592 757 A1**
(43) Veröffentlichungstag der Anmeldung: **20.04.1994**
(21) Anmeldenummer: 93101293.4
(22) Anmeldetag: 28.01.1993
(51) Int. Cl.: H02B 7/01

(54) **(Kompakt-)Schaltstation für eine elektrische Schalteinrichtung**

(30) Priorität: 14.10.1992 DE 9213806 U
(71) Anmelder: BETON- ELEMENTE- UND BAUSTOFFWERK HEINRICH GRÄPER GmbH & CO. KG, D-26190 Ahlhorn (DE)
(72) Erfinder: Lüers, Werner, Dipl.-Ing., W-2907 Grossenkneten-Ahlhorn (DE)
(74) Vertreter: Hoormann, Walter, Dr.-Ing.

(57) **Zusammenfassung**

(Kompakt-)Schaltstation für eine mit Hochspannung betriebene elektrische Schalteinrichtung, insbesondere Transformatorstation für Hochspannungsleitungen, mit einem durch Seitenwände, eine Decke und einen Boden gebildeten, i. a. mit wenigstens einer Lüftungsöffnung versehenen Schaltraum, unter dem eine Kabelkammer angeordnet ist, die über wenigstens eine im Boden des Schaltraums ausgebildete Durchgangsöffnung mit einem die Schalteinrichtung umgebenden Gaskessel od. dgl. verbunden ist, wobei zwischen dem Gaskessel (13) od. dgl. und der Kabelkammer (11) eine (Thermo-)Absorbereinrichtung (21) angeordnet ist, durch welche das bei einem Kurzschluß erhitzte Gas der Gaskammer (13) unter entsprechender Abkühlung zu entspannen und in die Kabelkammer (11) zu leiten ist.

## Beschreibung

Die Erfindung betrifft eine (Kompakt-)Schaltstation für eine mit hoher Spannung und/oder hoher Stromstärke zu betreibende bzw. betriebene elektrische Schalteinrichtung, insbesondere eine Transformatorstation für Hochspannungsleitungen, mit einem durch Seitenwände, eine Decke und einen Boden gebildeten, i. a. mit wenigstens einer Lüftungsöffnung versehenen und üblicherweise i. a. wenigstens teilweise betretbaren bzw. begehbaren Schaltraum, unter dem eine auch als Kabelkeller bezeichnete Kabelkammer angeordnet ist, die über wenigstens eine im Boden des Schaltraums ausgebildete Durchgangsöffnung, durch welche sich zur Schalteinrichtung geführte Kabel erstrecken, mit einem die Schalteinrichtung umgebenden, i. a. mit einem Schutzgas gefüllten und mit einer Druckklappe versehenen Gaskessel od. dgl. verbunden ist.

Eine derartige Schaltstation enthält i. a. außer einer Niederspannungsschaltanlage eine durch Hochspannung gespeiste Mittelspannungsschaltanlage, wobei die zugeführte bzw. angelegte Hochspannung von bspw. 20.000 V auf Mittelspannungsniveau transformiert wird.

Da es bei einem Kurzschluß in einer derartigen Schaltstation zu Stromstärken von bspw. 15.000 bis 17.000 Amp kommen kann, die derart große Erwärmungen der an einem Kurzschluß beteiligten Teile zur Folge haben, kommt es dabei nicht nur zu einer Verdampfung von Kupfer und sonstigen Materialien, sondern die schlagartige Erwärmung löst auch eine Druckwelle aus, die für den Fall eines Kurzschlusses so beherrscht werden muß, daß das Bedienungspersonal nicht gefährdet wird.

Um einen eventuellen Kurzschluß in einer derartigen Schaltstation zu beherrschen, ist - wie bereits ausgeführt - zunächst einmal die eigentliche Hochspannungs- bzw. Mittelspannungsschalteinrichtung von einem (Schutz-) Gaskessel umgeben, der i. a. mit Schwefelhexafluorid (SF₆) gefüllt ist, wobei dieser Gaskessel i. a. mit einer (Über-)Druckklappe od. dgl. versehen ist, die bei einem vorgegebenen inneren Grenzdruck des Gaskessels von bspw. 3 bar selbsttätig öffnet, so daß das beim Kurzschluß erwärmte Schwefelhexafluorid aus dem Gaskessel entweichen kann und es nicht zu dessen Explosion kommt.

Damit es weiterhin nicht zu einer Explosion des Schaltraums kommen kann, sind dessen Seitenwände i. a. mit ohnehin erforderlichen Lüftungsöffnungen versehen, die mit einer Vergitterung und/oder Tüchern od. dgl. versehen sind, so daß die bei einem Kurzschluß entstehende Druckwelle sich durch die Lüftungsöffnungen des Schaltraums entspannen kann.

Dabei befindet sich bei bisher bekannten Schaltstationen der hier in Rede stehenden Art die Schalteinrichtung und der diese umgebende Gaskessel, der üblicherweise auf ein Fundament geschraubt ist, in einem durch wenigstens eine Trennwand von den übrigen Bereichen des Schaltraums abgetrennten Nebenraum, damit eine sich bei einem eventuellen Kurzschluß in der Schaltstation befindliche Person nicht gefährdet wird.

Diese vorbekannten Schaltstationen der hier in Rede stehenden Gattung haben sich insoweit bewährt als es bei einem Kurzschluß i. a. tatsächlich nicht zu einer erheblichen Gefährdung von Bedienungspersonal kommen kann. Sie sind indes dennoch bisher noch nicht optimal, weil der für eine konventionelle Schaltstation erforderliche Bauaufwand (bspw./u. a. durch die erforderlichen Trennwände) erheblich ist. Außerdem wäre es höchst wünschenswert, wenn die oben bereits beschriebenen Schutzeinrichtungen der Lüftungsöffnungen bei einem Kurzschluß nicht von den entstehenden erheblichen Emissionen beaufschlagt bzw. belastet werden, und wenn die Sicherheit für ggf. während eines Kurzschlusses in der Schaltstation befindliche Personen noch weiter zu reduzieren wäre.

Der vorliegenden Erfindung liegt demgemäß die Aufgabe zugrunde, eine (Kompakt-)Schaltstation der eingangs beschriebenen Gattung zu schaffen, die keiner Trennwände od. dgl. zwischen dem die Schalteinrichtung nebst Gaskessel enthaltenden Teil und dem übrigen Teil der Schaltstation mehr bedarf, und bei welcher die Lüftungsöffnungen bei einem eventuellen Kurzschluß nicht mehr mit den hierdurch erzeugten Emissionen belastet werden, so daß/wobei zugleich angestrebt wird, daß das bei einem Kurzschluß ggf. in der Schaltstation befindliche Personal in keiner Weise mehr gefährdet bzw. unangenehmen Emissionseinwirkungen ausgesetzt ist.

Die Lösung dieser Aufgabe erfolgt erfindungsgemäß dadurch, daß zwischen dem die Schalteinrichtung umgebenden Gaskessel od. dgl. und der Kabelkammer eine (Thermo-)Absorbereinrichtung angeordnet ist, durch welche das bei einem Kurzschluß erhitzte Gas der Gaskammer (und die hierdurch ggf. entsprechend erwärmte Raumluft) unter entsprechender Abkühlung zu entspannen und in die Kabelkammer zu leiten ist.

Bevorzugt ist die Absorbereinrichtung, die wenigstens ein (vorzugsweise mehrere) aus Streckmetall od. dgl. bestehendes Absorberelement aufweisen bzw. hieraus bestehen kann, wenigstens teilweise in der Durchgangsöffnung zwischen dem Schaltraum und der Kabelkammer angeordnet, d. h. die Kabel-Durchgangsöffnungen zwischen Schaltraum und Kabelkammer werden in geeigneter bzw. erforderlicher Weise so vergrößert, daß sie die Absorbereinrichtung aufnehmen können, wobei es mithin bei einer Schaltstation, deren Gaskessel mit einer bei einem vorgegebenen Grenzdruck selbsttätig öffnenden Druckklappe od. dgl. versehen ist, ersichtlich höchst zweckmäßig und demgemäß bevorzugt ist, wenn die Druckklappe mit der Absorbereinrichtung in Verbindung steht, so daß das bei einem Kurzschluß erhitzte Gas nach dem Aufbauen des Grenzdruckes im Gaskessel und Öffnen der Druckklappe od. dgl. unmittelbar (und entsprechend geführt) zur Absorbereinrichtung gelangen kann.

Besteht diese aus Streckmetall od. dgl. bzw. weist zumindest entsprechende Absorberelemente auf, so ergibt sich beim Durchströmen der Absorbereinrichtung bereits insoweit ein Entspannungseffekt als das heiße Gas beim Durchströmen der Absorbereinrichtung abkühlt (= Thermoentspannung).

Darüber hinaus wird der angestrebte Entspannungseffekt dadurch verstärkt, daß das von der Schalteinrichtung unmittelbar in den Kabelkeller strömende Gas sich unter entsprechender Energievernichtung "totschwingt". Um insoweit optimale Verhältnisse zu schaffen, wird die Größe bzw. das Volumen der Kabelkammer (bzw. deren für diese Maßnahme genutzter Teil) bevorzugt auf das Volumen des Gaskessels abgestimmt, wobei es sich als höchst zweckmäßig erwiesen hat, wenn das Volumen der - wie ausgeführt - auch als Expansionskammer dienenden Kabelkammer etwa das 1,5- bis 5fache (vorzugsweise etwas das 3fache) des Volumens des Gaskessels od. dgl. betragt.

Wie bereits aus den vorstehenden Darlegungen hervorgeht, ist es höchst zweckmäßig, wenn die bzw. wenigstens eine Durchgangsöffnung unmittelbar unter dem Gaskessel od. dgl. angeordnet ist. Darüber hinaus können zweckmäßiger- und demgemäß bevorzugterweise jedoch im Boden des Schaltraums weitere mit gegenseitigem Abstand angeordnete Durchgangsöffnungen vorgesehen sein (bevorzugt sind wenigstens drei Durchgangsöffnungen vorhanden), die sämtlichst jeweils mit einer Absorbereinrichtung versehen sein können.

Überdies hat es sich als höchst Zweckmäßig herausgestellt, wenn die Ecken der Kabelkammer nicht wie üblich scharfkantig ausgebildet, sondern abgerundet sind.

Weiter hat es sich für die Lösung der obigen Aufgabe als höchst zweckmäßig herausgestellt, wenn in der Kabelkammer Gas-Leiteinrichtungen vorgesehen sind, mittels welcher die bei einem Kurzschluß erzeugte, erfindungsgemäß in die Kabelkammer geleitete (Druck-)Gasströmung gezielt so zu leiten ist, daß die Druckwelle in der Kabelkammer in bestimmter Weise hin- und herschwingt, wobei diese Gas-Leiteinrichtungen als Leitbleche ausgebildet sein können.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:
- Fig. 1: eine seitliche Schnittansicht einer erfindungsgemäßen Schaltstation in Richtung der Schnittlinie I-I in Fig. 2 gesehen;
- Fig. 2: eine Draufsicht auf die Schaltstation gemäß Fig. 1 in Richtung des Pfeiles II in Fig. 1 gesehen;
- Fig. 3: eine Außenansicht der Schaltstation gemäß den Fig. 1 und 2 in Richtung des Pfeiles III in Fig. 2 gesehen;

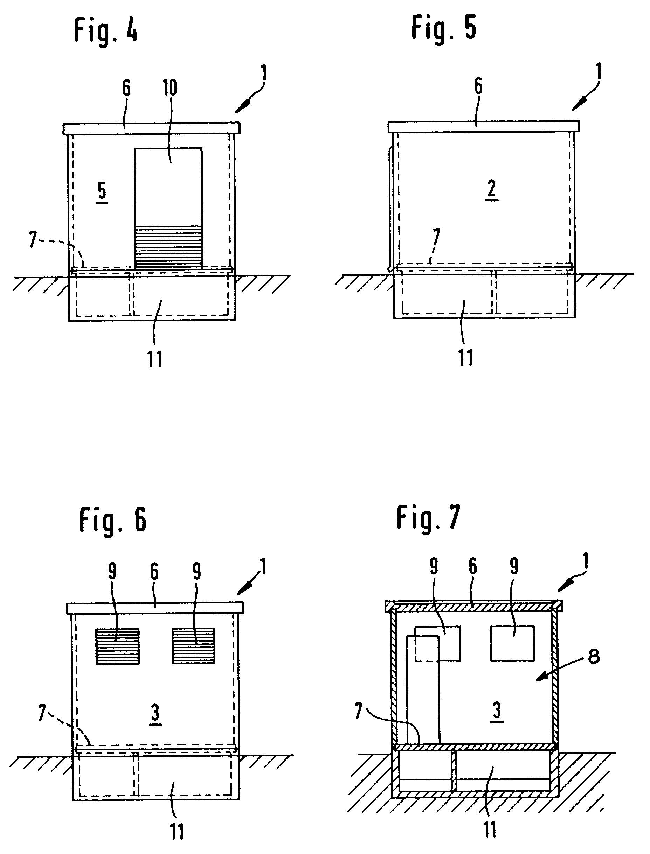

- Fig. 4: eine Außenansicht der Schaltstation gemäß den Fig. 1 bis 3 in Richtung des Pfeiles IV in Fig. 2 gesehen;
- Fig. 5: eine Außenansicht der Schaltstation gemäß den Fig. 1 bis 4 in Richtung des Pfeiles V in Fig. 2 gesehen;
- Fig. 6: eine Außenansicht der Schaltstation gemäß den Fig. 1 bis 5 in Richtung des Pfeiles VI in Fig. 2 gesehen; und
- Fig. 7: eine Schnittansicht der Schaltstation gemäß den Fig. 1 bis 6 in Richtung der Schnittlinie VII-VII in Fig. 2 gesehen.

Die Zeichnung zeigt eine im ganzen mit 1 bezeichnete (Kompakt-)Schaltstation für eine mit Hochspannung betriebene Schalteinrichtung, genauer gesagt eine Hochspannungs-Transformatorstation, mit einem durch vier Seitenwände 2 bis 5, eine Decke 6 und einen Boden 7 gebildeten Schaltraum 8. Der Schaltraum 8 ist mit Lüftungsöffnungen 9 versehen, die sich in der Seitenwand 3 befinden, und durch eine Tür 10 begehbar.

Unter dem Schaltraum 8 befindet sich eine auch als Kabelkeller bezeichnete Kabelkammer 11, aus welcher sich im einzelnen nicht dargestellte Kabel in den Schaltraum 8 bzw. der dort befindlichen Schalteinrichtung 12 erstrecken. Die Schalteinrichtung 12 ist von einem mit Schwefelhexafluorid gefüllten Gaskessel 13 umgeben, der im wesentlichen die Form eines großen Kühlschrankes besitzt, also im vorliegenden Falle quaderförmit ausgebildet ist und auf ein Fundament 14 geschraubt ist.

Wie aus der Zeichnung ersichtlich ist, ist die Schaltstation 1 bzw. deren Schaltraum 8 nicht mit einer Trennwand versehen. Eine (kleine) Trennwand 15 befindet sich vielmehr lediglich in der Kabelkammer 11, um dort einen Raum abzuteilen, dessen Volumen etwa dem Dreifachen des Volumens des Gaskessels 12 entspricht. Zwischen diesem Teil der Kabelkammer 11 und dem Schaltraum 8 befindet sich eine erste Durchgangsöffnung, die in der Zeichnung nicht erkennbar ist, weil sie sich unmittelbar unterhalb der Schalteinrichtung 12 bzw. des Gaskessels 13 befindet. Eine ebenfalls in der Zeichnung nicht erkennbare Druckklappe des Gaskessels 13, die bei einem Innendruck des Gaskessels 13 von 3 bar öffnet, so daß dieser durch die unmittelbar unterhalb des Gaskessels 13 vorgesehene Durchgangsöffnung in die Kabelkammer 11 entweichen kann.

Diese erste Durchgangsöffnung ist gegenüber konventionellen Schaltstationen, bei denen sie lediglich einer (engen) Kabelführung dient, vergrößert und mit einer Absorbereinrichtung versehen, die im wesentlichen aus Streckmetallelementen besteht. Außerdem ist der Boden 7 des Schaltraums 8 noch mit Durchgangsöffnungen 16 und 17 sowie einem ebenfalls eine Durchgangsöffnung bildenden Mannloch 18 versehen, wobei auch die Durchgangsöffnungen 16 bis 18 jeweils mit einer Absorbereinrichtung versehen sind, obwohl sie bei einem Kurzschluß nicht unmittelbar von dem aus dem Gaskessel 13 entweichenden, erhitzten Gas beaufschlagt werden.

Die Ecken der Kabelkammer 11 (zumindest deren u. a. durch die Trennwand 15 abgetrennten Teils, dessen Volumen auf das Volumen des Gaskessels 13 abgestimmt ist) sind abgerundet. Außerdem ist die Kabelkammer 11 mit in der Zeichnung nicht im einzelnen erkennbaren Gas-Leiteinrichtungen in der Art von Leitblechen versehen.

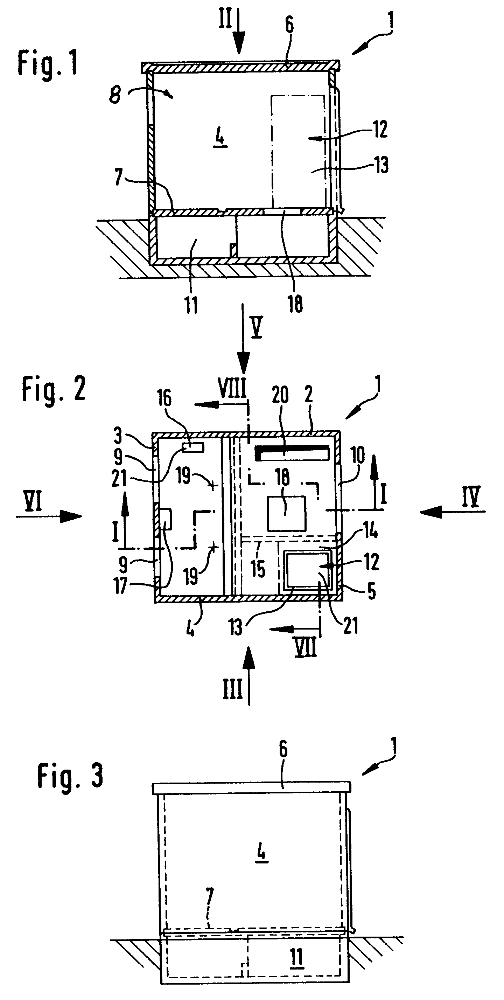

Der Vollständigkeit halber sei noch darauf verwiesen, daß der in der Zeichnung nicht eingezeichnete Transformator an einer Stelle angeordnet und mit dem Boden 7 des Schaltraums 8 verschraubt ist, die in Fig. 2 mit Kreuzen 19 gekennzeichnet sind, und daß im Schaltraum 8 noch eine Niederspannungsverteilung 20 vorhanden ist (s. Fig. 2). An dieser Stelle sind entsprechende Kabel aus der Kabelkammer 11 nach oben herausgeführt.

Kommt es in der Schaltstation 1 im kritischen Bereich ihrer Schalteinrichtung 12 zu einem Kurzschluß mit entsprechenden Emissionen, so öffnet die Druckklappe des Gaskessels 13 nach Aufbau eines Innendruckes von 3 bar im Gaskessel 13 mit der Folge, daß sich das entsprechend erhitzte und demgemäß in seinem Volumen vergrößerte Schwefelhexafluorid durch die unterhalb des Gaskessels 13 befindliche Durchgangsöffnung und deren Absorbereinrichtung 21 in die Kabelkammer 11 entspannt. Beim Durchströmen der im wesentlichen aus Streckmetall bestehenden Absorbereinrichtung wird das unter erheblichem Druck stehende Gas nennenswert abgekühlt und in der Kabelkammer 11 - geführt durch Leitbleche - so geleitet, daß seine Energie bei den sich danach abspielenden Gas-Schwingungsvorgängen schnell und effektiv vernichtet wird. Die Wirksamkeit dieser Maßnahmen ist so groß, daß sich bei einem eventuellen Kurzschluß Bedienungspersonal unbedenklich im Schaltraum 8 befinden kann, ohne dabei gefährdet zu werden, obwohl im Schaltraum 8 noch nicht einmal eine Trennwand vorhanden ist, welche den den Gaskessel 13 und die Schalteinrichtung 12 enthaltenden kritischen Teil enthält. Dieses hat dann ersichtlich auch zur Folge, daß die Lüftungsöffnungen 9 etc. von den Emissionen nicht wie beim Stand der Technik mit irgendwelchen beachtlichen Emissionen beaufschlagt werden, so daß insgesamt erfindungsgemäß eine Schaltstation geschaffen worden ist, die gegenüber vorbekannten (Kompakt-)Schaltstationen nicht nur ganz erhebliche technische und physiologische Vorteile aufweist, sondern darüber hinaus auch unter wirtschaftlichen Gesichtspunkten jeglicher Art äußerst zweckmäßig ist.

### BEZUGSZEICHENLISTE

- 1: Schaltstation
- 2: Seitenwand (von 8)
- 3: Seitenwand (von 8)
- 4: Seitenwand (von 8)
- 5: Seitenwand (von 8)
- 6: Decke (von 8)
- 7: Boden (von 8)
- 8: Schaltraum
- 9: Lüftungsöffnungen (von 8)
- 10: Tür
- 11: Kabelkammer (-keller)
- 12: Schalteinrichtung
- 13: Gaskessel
- 14: Fundament
- 15: Trennwand
- 16: Durchgangsöffnung (in 7)
- 17: Durchgangsöffnung (in 7)
- 18: Mannloch
- 19: Befestigungsstellen (Trafo-)
- 20: Niederspannungsverteilung
- 21: Absorbereinrichtung

## Patentansprüche

1. (Kompakt-)Schaltstation für eine mit Hochspannung betriebene elektrische Schalteinrichtung, insbesondere Transformatorstation für Hochspannungsleitungen, mit einem durch Seitenwände, eine Decke und einen Boden gebildeten, i. a. mit wenigstens einer Lüftungsöffnung versehenen Schaltraum, unter dem eine Kabelkammer angeordnet ist, die über wenigstens eine im Boden des Schaltraums ausgebildete Durchgangsöffnung mit einem die Schalteinrichtung umgebenden Gaskessel od. dgl. verbunden ist, dadurch gekennzeichnet, daß zwischen dem Gaskessel (13) od. dgl. und der Kabelkammer (11) eine (Thermo-)Absorbereinrichtung (21) angeordnet ist, durch welche das bei einem Kurzschluß erhitzte Gas der Gaskammer (13) unter entsprechender Abkühlung zu entspannen und in die Kabelkammer (11) zu leiten ist.

2. Schaltstation nach Anspruch 1, dadurch gekennzeichnet, daß die Absorbereinrichtung (21) wenigstens teilweise in der/einer Durchgangsöffnung (16 bis 18) zwischen dem Schaltraum (8) und der Kabelkammer (11) angeordnet ist.

3. Schaltstation nach Anspruch 1 oder 2, deren Kessel mit einer bei einem vorgegebenen Grenzdruck selbsttätig öffnenden Druckklappe od. dgl. versehen ist, dadurch gekennzeichnet, daß die Druckklappe mit der Absorbereinrichtung (21) in Verbindung steht.

4. Schaltstation nach einem oder mehreren der vorhergehenden Ansprüche, dadurch gekennzeichnet, daß die Absorbereinrichtung (21) wenigstens ein aus Streckmetall od. dgl. bestehendes Absorberelement aufweist.

5. Schaltstation nach Anspruch 4, dadurch gekennzeichnet, daß die Absorbereinrichtung (21) mehrere Absorberelemente aufweist.

6. Schaltstation nach einem oder mehreren der vorhergehenden Ansprüche, dadurch gekennzeichnet, daß die Durchgangsöffnung(en) (16 bis 18) unter dem Gaskessel (13) od. dgl. angeordnet ist (sind).

7. Schaltstation nach einem oder mehreren der vorhergehenden Ansprüche, dadurch gekennzeichnet, daß das Volumen der zugleich als Expansionskammer dienenden Kabelkammer (11) etwa das 1,5- bis 5fache des Volumens des Gaskessels (13) od. dgl. beträgt.

8. Schaltstation nach Anspruch 7, dadurch gekennzeichnet, daß das Volumen der Kabelkammer (11) etwa das 3fache des Volumens des Gaskessels (13) od. dgl. beträgt.

9. Schaltstation nach einem oder mehreren der vorhergehenden Ansprüche, dadurch gekennzeichnet, daß im Boden (7) des Schaltraums (8) mehrere mit gegenseitigem Abstand angeordnete Durchgangsöffnungen (z. B. 16, 17, 18) vorgesehen sind.

10. Schaltstation nach Anspruch 9, dadurch gekennzeichnet, daß im Boden (7) des Schaltraums (8) wenigstens drei Durchgangsöffnungen (z. B. 16, 17, 18) vorhanden sind.

11. Schaltstation nach Anspruch 9 oder 10, dadurch gekennzeichnet, daß sämtliche Durchgangsöffnungen (z. B. 16 bis 18) mit Absorbereinrichtungen (21) versehen sind.

12. Schaltstation nach einem oder mehreren der vorhergehenden Ansprüche, dadurch gekennzeichnet, daß die Ecken der Kabelkammer (11) abgerundet ausgebildet sind.

13. Schaltstation nach einem oder mehreren der vorhergehenden Ansprüche, dadurch gekennzeichnet, daß in der Kabelkammer (11) Gas-Leiteinrichtungen vorhanden sind.

14. Schaltstation nach Anspruch 13, dadurch gekennzeichnet, daß die Gas-Leiteinrichtungen zumindest im wesentlichen aus Leitblechen od. dgl. gebildet sind.

15. Schaltstation nach einem oder mehreren der vorhergehende Ansprüche, dadurch gekennzeichnet, daß der Gaskessel (13) od. dgl. mit dem Boden (7) des Schaltraums (8) fest verbunden ist.

16. Schaltstation nach Anspruch 15, dadurch gekennzeichnet, daß der Gaskessel (13) od. dgl. mit dem Boden (7) des Schaltraums (8) verschraubt ist.

17. Schaltstation nach Anspruch 15 oder 16, dadurch gekennzeichnet, daß der Boden (7) des Schaltraums (8) wenigstens im Bereich des Gaskessels (13) od. dgl. mit einem Fundament (14) versehen ist, und daß in dem Fundament (14) wenigstens eine Durchgangsöffnung vorgesehen ist.

18. Schaltstation nach einem oder mehreren der vorhergehenden Ansprüche, dadurch gekennzeichnet, daß zwischen der Expansionskammer und der Kabelkammer (11) eine Absorbereinrichtung angeordnet ist.
